# EUROPÄISCHE PATENTSCHRIFT

(11) **EP 2 865 541 B1**
(45) Veröffentlichungstag und Bekanntmachung des Hinweises auf die Patenterteilung: **12.10.2016**
(21) Anmeldenummer: 14182562.0
(22) Anmeldetag: 28.08.2014
(51) Int. Cl.: B60C 9/00, D02G 3/38, D02G 3/48

(54) **Hybridfestigkeitsträger für elastomere Erzeugnisse, insbesondere für die Gürtelbandage von Fahrzeugluftreifen**
Hybrid reinforcing substrate for elastomer products, in particular for the carcass of vehicle pneumatic tyres
Support de fixation hybride pour des produits en élastomère, notamment pour la ceinture de pneus de véhicules

(30) Priorität: 25.10.2013 DE 102013221728
(43) Veröffentlichungstag der Anmeldung: 29.04.2015
(73) Patentinhaber: Continental Reifen Deutschland GmbH, 30165 Hannover (DE)
(72) Erfinder: Reese, Wolfgang, 31228 Peine (DE)
(74) Vertreter: Finger, Karsten

(56) Entgegenhaltungen:
- EP-A1- 1 033 435
- EP-A1- 1 512 780
- EP-A2- 1 293 600
- WO-A1-2009/073761
- DE-A1- 19 535 597

## Beschreibung

Die Erfindung betrifft einen Hybridfestigkeitsträger für elastomere Erzeugnisse, insbesondere für die Gürtelbandage von Fahrzeugluftreifen, wobei der Hybridfestigkeitsträger einen geradlinigen Kern und einen diesen Kern umgebenden Mantel aufweist, wobei der Kern ein Filament oder mehrere Filamente einer ersten Filamentart aufweist, wobei der Mantel Filamente einer zweiten Filamentart aufweist, wobei das oder die Filamente der ersten Filamentart einen niedrigeren Elastizitätsmodul als die Filamente der zweiten Filamentart aufweisen, wobei sich die Filamente der zweiten Filamentart um den Kern winden und miteinander keine Vorverdrehung aufweisen.

Um bei Fahrzeugluftreifen, insbesondere im Hochgeschwindigkeitseinsatz, eine Erhebung des Reifens durch die im Fahrbetrieb auftretenden Fliehkräfte zu verhindern, ist es bekannt, bei einem Fahrzeugluftreifen eine Gürtelbandage vorzusehen. Ein Fahrzeugluftreifen radialer Bauart weist im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen profilierten Laufstreifen und einen zwischen dem Laufstreifen und der Karkasse angeordneten Gürtel auf, welcher radial außen mit der Gürtelbandage abgedeckt ist. Die Gürtelbandage kann ein- oder mehrlagig ausgebildet sein und deckt zumindest die Gürtelränder ab. Die Gürtelbandage enthält üblicherweise parallel und im Wesentlichen in Umfangsrichtung verlaufende Festigkeitsträger, die in Gummi eingebettet sind.

Die Gürtelbandage wird bei der Reifenherstellung in Form von Lagen, Streifen oder Einzel-Festigkeitsträgern mit in eine unvulkanisierte Kautschukmischung eingebetteten Festigkeitsträgern aufgebracht, die auf den Gürtel gewickelt oder gespult werden. Die Festigkeitsträger werden in Kautschuk eingebettet, indem eine Schar von im Wesentlichen parallel liegenden fadenförmigen Festigkeitsträgern, die in der Regel zur besseren Haftung am einbettenden Gummi in einer dem Fachmann bekannten Art mit einer Imprägnierung vorbehandelt sind, in Längsrichtung einen Kalander oder einen Extruder zur Ummantelung mit der Kautschukmischung durchlaufen.

Die Festigkeitsträger der Gürtelbandage sollen bei der Reifenherstellung eine ausreichende Erhebung bei der Bombage sowie in der Vulkanisationsform zulassen, damit der Reifen präzise ausgeformt werden kann, und sie sollen nach der Fertigstellung des Reifens im Fahrbetrieb eine gute Hochgeschwindigkeitstauglichkeit gewährleisten. Um diesen Anforderungen zu genügen, sollten die Festigkeitsträger eine für die Reifenherstellung ausreichende Bruchdehnung aufweisen und sich bis zu einer Dehnung von ca. 3 bis 4 % mit mäßigem Kraftaufwand und ab einer höheren Dehnung nur noch mit sehr hohem Kraftaufwand dehnen lassen.

Auch für Fördergurte, Antriebsriemen, Schläuche und Luftfederbälge ist der Einsatz von Festigkeitsträgern mit auf die Anforderungen abgestimmten physikalischen Eigenschaften notwendig.

Als Festigkeitsträger für die Gürtelbandage sind schon unterschiedliche Festigkeitsträger vorgeschlagen worden.

Ein Festigkeitsträger der eingangs genannten Art ist beispielsweise aus der EP 1 293 600 A2 bekannt. Der Festigkeitsträger weist ein Kernfilament aus einem elastisch oder plastisch verformbaren polymeren Werkstoff und diesen umhüllende Stahl-Lagenfilamente auf. Das Kernfilament füllt den von den Stahl-Lagenfilamenten umschlossenen Raum auf und/oder dringt in die Zwischenräume zwischen den Stahl-Lagenfilamenten ein, welche parallel zueinander liegend um das Kernfilament verseilt sind.

Aus der EP 1 512 780 A1 ist ein Hybridfestigkeitsträger mit einem Kern und einem aus mehreren Filamenten bestehenden Mantel bekannt, wobei die zum Mantel gehörenden Filamente des Mantels jeweils verdreht sind und anschließend mit dem Kernfilament verdreht sind.

Ein weiterer für elastomere Produkte vorgesehener Hybridfestigkeitsträger ist aus der EP 1 033 435 A1 bekannt. Dieser Hybridfestigkeitsträger weist einen Kern aus einem polymeren Material mit einer hohen Molekularmasse und einen zweilagigen Mantel mit einer Anzahl von Filamenten aus Stahl in jeder Lage auf.

Ein Festigkeitsträger zur Verstärkung von Fahrzeugluftreifen ist aus der DE 195 35 597 A1 bekannt. Der Festigkeitsträger weist mindestens drei um ein durchlaufendes Kernfilament angeordnete Drahtfilamente auf. Das Kernfilament besteht aus einem kontraktionsfähigen, nicht-metallischen Werkstoff, beispielsweise aus nicht verstrecktem Nylon.

Aus der WO 2009/073761 A1 ist ein Hybridfestigkeitsträger für Fahrzeugluftreifen bekannt, welcher einen Kern aus mindestens einem p-Aramid-Filament und einen Mantel aus um den Kern gewundenen Stahlfilamenten aufweist. Der Elastizitätsmodul der p-Aramid-Filamente ist größer als 6,5 N/dtex und beträgt vorzugsweise höchstens 10,8 N/dtex.

In der DE 603 03 437 T2 werden als Festigkeitsträger einer Gürtelbandage eines Fahrzeugluftreifens Hybridfestigkeitsträger offenbart, die einen geradlinigen Kern aus miteinander vorverdrehten Filamenten einer ersten Filamentart und einen den Kern umgebenden Mantel aus miteinander vorverdrehten Filamenten einer weiteren Filamentart aufweisen. Das Zusammenfügen des Kerns und des Mantels erfolgt ohne dass Mantel und Kern miteinander verdreht werden. Die Filamente der ersten Filamentart weisen dabei einen geringeren Elastizitätsmodul als die Filamente der zweiten Filamentart auf.

Eine solche Hybridkonstruktion erlaubt ein Dehnverhalten, das bei geringer Verformung einen geringeren Elastizitätsmodul und bei größerer Verformung einen im Vergleich hierzu größeren Elastizitätsmodul aufweist. Das Kraft-Dehnungs-Verhalten ermöglicht die Erhebung bei der Bombage und der Vulkanisation des Reifens und macht den Reifen hochgeschwindigkeitstauglich. Eine eventuelle geringe Bruchdehnung des hochmoduligen Mantels kann allerdings zum Bruch der Festigkeitsträger im Einsatz oder bereits beim Reifenherstellung bzw. der Reifenmontage führen.

Der vorliegenden Erfindung liegt die Aufgabe zu Grunde, einen Festigkeitsträger für elastomere Erzeugnisse, insbesondere für die Gürtelbandage von Fahrzeugluftreifen, bereitzustellen, welcher die Haltbarkeit des elastomeren Erzeugnisses erhöht. Zudem soll sich der Festigkeitsträger durch ein Kraft-Dehnungs-Verhalten auszeichnen, das bei Verwendung der Festigkeitsträgerlage, insbesondere als Gürtelbandage in Fahrzeugluftreifen, einen problemlosen Reifenbau samt Vulkanisation ermöglicht und dem Reifen eine große Hochgeschwindigkeitstauglichkeit verleiht.

Die Aufgabe wird gelöst, indem das oder die Filamente der ersten Filamentart einen Elastizitätsmodul von höchstens 100 mN/tex und die Filamente der zweiten Filamentart einen Elastizitätsmodul von mindestens 200 mN/tex aufweisen.

Bedeutend ist hierbei, dass die Filamente der zweiten Filamentart nicht miteinander vorverdreht sind. Als miteinander vorverdrehte Filamente wird ein Bündel aus miteinander verdrehten Filamenten verstanden, wobei die Verdrehung unabhängig von einer eventuell durch die Anordnung des Bündels relativ zu anderen Filamenten resultierenden Verdrehung besteht.

Hierdurch werden durch Vorverdrehung erzeugte mechanische Belastungen, welche besonders bei Filamenten mit höherem Elastizitätsmodul und / oder höherer Kristallinität in der Regel die Festigkeit reduzieren bzw. zu Filament-Brüchen führen können, auf die Filamente der zweiten Filamentart vermieden. Die möglichweise bestehende Gefahr eines Bruchs der Filamente der zweiten Filamentart ist somit vermieden, während die übrigen vorteilhaften Eigenschaften eines Hybridfestigkeitsträgers erhalten sind.

Die Konstruktion des Hybridfestigkeitsträgers erlaubt es, dass die Filamente des Mantels gleichmäßig um den Kern gelegt sind, insbesondere gleichmäßiger als beispielsweise bei Hybridfestigkeitsträgern, bei denen Filamente des Mantels miteinander vorverdreht sind. Durch diese Konstruktion sind die Hybridfestigkeitsträger dünn ausführbar und dünner als beispielsweise bei gleicher Feinheit des Mantels mit Vorverdrehung der Filamente der zweiten Filamentart. Hierdurch kann eine Festigkeitsträgerlage bereitgestellt werden, die sich durch eine geringere Dicke auszeichnet. Zudem kann Gummierung eingespart werden. Hierdurch sind Hysterese sowie Gewicht und Kosten reduziert. Beim Einsatz in Fahrzeugluftreifen kann somit ein verringerter Rollwiderstand erwirkt werden.

Für problemlosen Reifenbau mit Vulkanisation und gute Hochgeschwindigkeitstauglichkeit weist das oder die Filamente der ersten Filamentart einen Elastizitätsmodul von höchstens 100 mN/tex und die Filamente der zweiten Filamentart einen Elastizitätsmodul von mindestens 200 mN/tex auf. Der Elastizitätsmodul ist dabei gemessen nach ASTM D 885.

Vorteilhaft ist es, wenn das oder die Filamente der ersten Filamentart aus Polyester (PES) oder Polyamid (PA) sind. Der Einsatz eines solchen Garns im Kern des Hybridfestigkeitsträgers ermöglicht bei geringer Verformung einen geringen Elastizitätsmodul des Hybridfestigkeitsträgers und somit eine ausreichende Erhebung bei der Bombage und der Vulkanisation des Reifens.

Vorteilhafterweise ist der Polyester (PES) eines Polyestergarns ausgewählt aus der Gruppe bestehend aus Polyethylenterephthalat (PET) und/oder Polyethylennaphthalat (PEN) und/oder Polybutylenterephthalat (PBT) und/oder Polycarbonat (PC), welches formal als Polyester betrachtet werden kann. Bevorzugt ist die Verwendung von PEN und/oder PET, besonders bevorzugt ist die Verwendung von PET. PET weist gegenüber PEN den Vorteil auf, dass es vergleichsweise kostengünstig ist. Handelt es sich bei dem Polyestergarn der erfindungsgemäßen Festigkeitsträgerlage um PET, so werden bevorzugt HMLS-(High Modulus Low Shrinkage) und/oder HMNS (Regular)-PET verwendet.

Das Polyamid eines Garns aus Polyamid ist ausgewählt aus der Gruppe bestehend aus Polyamid 6 (PA 6) und/oder Polyamid 66 (PA 66) und/oder Polyamid 12 (PA 12) und/oder Polyamid 11 (PA 11) und/oder Polyamid 1313 (PA 1313) und/oder Polyamid 4 (PA 4) und/oder Polyamid 7 (PA 7) und/oder Polyamid 8 (PA 8) und/oder Polyamid 9 (PA 9) und/oder Polyamid 46 (PA 46) und/oder Polyamid 610 (PA 610) und/oder Polyamid 612 (PA 612) und/oder Polyamid 69 (PA 69) und/oder Polyamid 66/6 (PA 66/6). Bevorzugt ist die Verwendung von PA 6 und/oder PA 66, besonders bevorzugt ist die Verwendung von PA 66.

Vorteilhafterweise sind die Filamente der zweiten Filamentart aus Aramid, Glas oder Carbon. Der, insbesondere vergleichsweise zu PES oder PA, höhere, Elastizitätsmodul solcher Filamente ermöglicht eine gute Hochgeschwindigkeitstauglichkeit beim Einsatz im Fahrzeugluftreifen. Insbesondere die Kombination eines Kerns aufweisend Filamente aus PES oder PA mit einem Mantel aufweisend Filamente aus Aramid hat sich als vorteilhaft erwiesen.

Vorteilhaft ist es, wenn der Kern und / oder der Mantel jeweils eine Feinheit von höchstens 1100 dtex aufweisen. Somit ist ein dünner Hybridfestigkeitsträger zur Verfügung gestellt, der beim Einsatz in einer Festigkeitsträgerlage eines elastomeren Erzeugnisses eine vorteilhafte Haltbarkeit aufweist.

Vorteilhaft ist es, wenn der Kern aus einem Filament oder aus mehreren, d.h. mindestens zwei, Filamenten gebildet ist. In einer vorteilhaften Ausgestaltung weist der Kern mehrere Filamente auf, die miteinander nicht vorverdreht sind. In einer weiteren vorteilhaften Ausgestaltung sind die mehreren Filamente des Kerns miteinander vorverdreht. Durch die individuelle Gestaltung des Kerns kann ein Festigkeitsträger bereitgestellt werden, dessen Eigenschaften auf die geforderten Eigenschaften der Festigkeitsträgerlage abgestimmt sind.

Vorteilhaft ist es auch, wenn die Filamente des Mantels einen Twist-Faktor α von kleiner als 100, bevorzugt kleiner als 75, aufweisen. Der Twist-Faktor α ist dabei definiert als α = Twist [t/m]·(Feinheit [tex]/ 1000)^{1/2}. Der Twist-Faktor beschreibt also die Windung der Filamente des Mantels um den Kern. Die Feinheit bezeichnet dabei die Feinheit des Mantels. Ein Hybridfestigkeitsträger mit einem solchen Twist-Faktor zeichnet sich durch ein Kraft-Dehnungs-Verhalten aus, das bei Verwendung der Festigkeitsträgerlage, insbesondere als Gürtelbandage in Fahrzeugluftreifen, einen problemlosen Reifenbau samt Vulkanisation ermöglicht und dem Reifen eine große Hochgeschwindigkeitstauglichkeit verleiht.

Weist der Kern mehrere miteinander vorverdrehte Filamente auf, so ist ein Twist-Faktor α dieser Filamente von kleiner als 100, bevorzugt kleiner als 75, zweckmäßig. Die Filamente des Kerns können dabei in die gleiche Richtung gedreht sein wie die Filamente des Mantels. Sie können aber auch in die andere Richtung gedreht sein.

Ein vorteilhafter Hybridfestigkeitsträger aufweisend einen Kern und einen diesen umgebenden Mantel ergibt sich, wenn die Filamente der zweiten Filamentart um den Kern gewickelt, verdrillt oder gesponnen sind. Hierdurch kann eine gleichmäßige Verteilung der Filamente der zweiten Filamentart um den Kern erreicht werden.

Um die Haftung von textilen Festigkeitsträgern zum Gummi zu gewährleisten, ist es vorteilhaft, wenn die Hybridfestigkeitsträger mit einem RFL-Dip (Resorzin-Formaldehyd-Lösung) zur Haftung zwischen Gummi und Hybridfestigkeitsträger gedippt sind. Es sind aber auch alle weiteren der fachkundigen Person bekannten Verfahren und Haftmittel zur Imprägnierung denkbar.

Eine Festigkeitsträgerlage für elastomere Erzeugnisse, insbesondere für Fahrzeugluftreifen, die solche Hybridfestigkeitsträger enthält, weist neben einem vorteilhaften Kraft-Dehnungs-Verhalten eine gut Haltbarkeit auf. Vorteilhaft ist dies auch für Fördergurte, Antriebsriemen, Schläuche oder Luftfederbälge. Die Hybridfestigkeitsträger sind dabei innerhalb der Lage im Wesentlichen parallel zueinander angeordnet.

Verwendet man wenigstens eine vorbeschriebene Festigkeitsträgerlage in einem Fahrzeugluftreifen, vorzugsweise als Gürtelbandage, so weist der Reifen eine verbesserte Haltbarkeit auf und ermöglicht einen problemlosen Reifenbau samt Vulkanisation sowie eine gute Hochgeschwindigkeitstauglichkeit.

Weitere Merkmale, Vorteile und Einzelheiten der Erfindung werden nun anhand der Figuren, die schematische Ausführungsbeispiele darstellen, näher beschrieben. Dabei zeigt die:
Fig. 1 einen Abschnitt eines erfindungsgemäßen Hybridfestigkeitsträgers,
Fig. 2 und Fig. 3 jeweils einen Querschnitt eines erfindungsgemäßen Hybridfestigkeitsträgers.

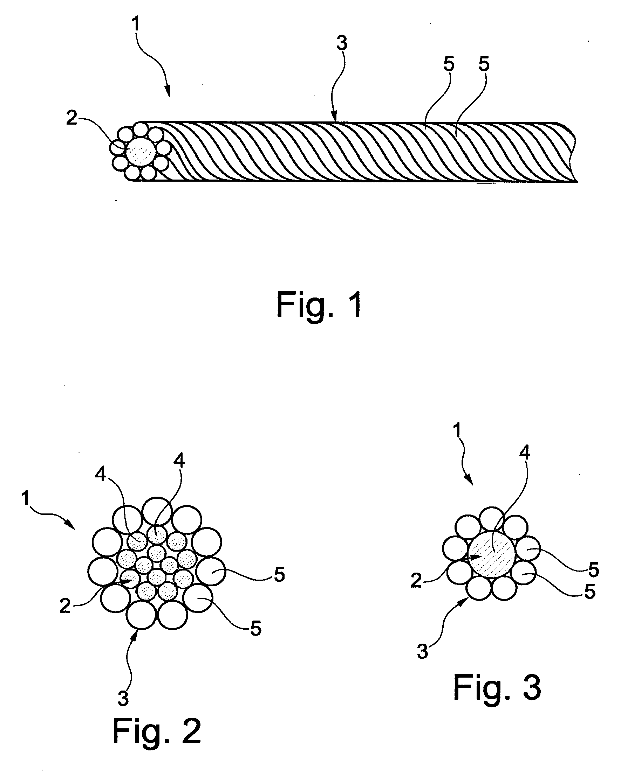

Die Figur 1 zeigt einen Abschnitt eines erfindungsgemäßen Hybridfestigkeitsträgers 1. Der Hybridfestigkeitsträger 1 weist einen geradlinigen Kern 2 und einen diesen Kern 2 umgebenden Mantel 3 auf. Der Kern 2 weist mehrere nicht weiter dargestellte Filamente 4 einer ersten Filamentart auf. Der Mantel 3 weist Filamente 5 einer zweiten Filamentart auf, wobei sich die Filamente 5 der zweiten Filamentart um den Kern 2 winden und miteinander keine Vorverdrehung aufweisen. Die Filamente 5 des Kerns sind aus PET und nicht miteinander vorverdreht. Die Filamente 5 des Mantels 3 sind aus Aramid gebildet und weisen einen höheren Elastizitätsmodul als die Filamente 4 auf. Der Kern 2 weist eine Feinheit von 238 dtex, der Mantel 3 eine Feinheit von 220 dtex auf, wobei die Filamente 5 den Kern 2 mit einem Twist-Faktor α von 70 umwinden.

In Figur 2 ist ein Hybridfestigkeitsträger 1 einer Gürtelbandage eines Fahrzeugluftreifens dargestellt. Der Kern 2 weist bei einer Feinheit von 235 dtex mehrere Filamente 4 aus PA 66, die mit einem Twist-Faktor α von 70 von miteinander vorverdreht sind, auf. Der Mantel 3 weist bei einer Feinheit von 220 dtex Filamente 5 aus Aramid auf, die mit einem Twist-Faktor α von 74 den Kern 2 umwinden. Der Hybridfestigkeitsträger 1 ist mit einem RFL-Dip gedippt.

In Figur 3 ist ein weiterer Hybridfestigkeitsträger 1 einer Gürtelbandage eines Fahrzeugluftreifens dargestellt. Der Kern 2 weist bei einer Feinheit von 238 dtex ein Filament 4 aus PET auf. Der Mantel 3 weist bei einer Feinheit von 220 dtex Filamente 5 aus Aramid auf, die mit einem Twist-Faktor α von 70 den Kern 2 umwinden. Der Hybridfestigkeitsträger 1 ist mit einem RFL-Dip gedippt.

### Bezugszeichen

### (Teil der Beschreibung)

- 1: Hybridfestigkeitsträger
- 2: Kern
- 3: Mantel
- 4: Filament einer ersten Filamentart
- 5: Filament einer zweiten Filamentart

## Patentansprüche

1. Hybridfestigkeitsträger (1) für elastomere Erzeugnisse, insbesondere für die Gürtelbandage von Fahrzeugluftreifen,
• wobei der Hybridfestigkeitsträger (1) einen geradlinigen Kern (2) und einen diesen Kern (2) umgebenden Mantel (3) aufweist,
• wobei der Kern (2) ein Filament (4) oder mehrere Filamente (4) einer ersten Filamentart aufweist,
• wobei der Mantel (3) Filamente (5) einer zweiten Filamentart aufweist,
• wobei das oder die Filamente (4) der ersten Filamentart einen niedrigeren Elastizitätsmodul als die Filamente (5) der zweiten Filamentart aufweisen,
• wobei sich die Filamente (5) der zweiten Filamentart um den Kern (2) winden und miteinander keine Vorverdrehung aufweisen,
**dadurch gekennzeichnet, dass**
• das oder die Filamente (4) der ersten Filamentart einen Elastizitätsmodul von höchstens 100 mN/tex und die Filamente (5) der zweiten Filamentart einen Elastizitätsmodul von mindestens 200 mN/tex aufweisen.

2. Hybridfestigkeitsträger (1) nach Anspruch 1, **dadurch gekennzeichnet, dass** das oder die Filamente (4) der ersten Filamentart aus Polyester (PES) oder Polyamid (PA) sind.

3. Hybridfestigkeitsträger (1) nach zumindest einem der vorangegangenen Ansprüche, **dadurch gekennzeichnet, dass** die Filamente (5) der zweiten Filamentart aus Aramid oder aus Glas oder aus Carbon sind.

4. Hybridfestigkeitsträger (1) nach zumindest einem der vorangegangenen Ansprüche, **dadurch gekennzeichnet, dass** der Kern (2) und / oder der Mantel (3) jeweils eine Feinheit von höchstens 1100 dtex aufweisen.

5. Hybridfestigkeitsträger (1) nach zumindest einem der vorangegangenen Ansprüche, **dadurch gekennzeichnet, dass** die Filamente (5) des Mantels einen Twist-Faktor von kleiner als 100, bevorzugt kleiner als 75, aufweisen.

6. Hybridfestigkeitsträger (1) nach zumindest einem der vorangegangenen Ansprüche, **dadurch gekennzeichnet, dass** die Filamente (5) der zweiten Filamentart um den Kern (2) gewickelt, verdrillt oder gesponnen sind.

7. Festigkeitsträgerlage für elastomere Erzeugnisse, insbesondere für Fahrzeugluftreifen, enthaltend Hybridfestigkeitsträger (1) gemäß zumindest einem oder mehreren der Ansprüche 1 bis 6.

8. Fahrzeugluftreifen aufweisend eine Festigkeitsträgerlage der Gürtelbandage gemäß Anspruch 7.

## Claims

1. Hybrid reinforcing substrate (1) for elastomer products, in particular for the carcass of pneumatic vehicle tyres,
wherein the hybrid reinforcing substrate (1) has a linear core (2) and a sleeve (3) surrounding said core (2);
wherein the core (2) has one filament (4) or a plurality of filaments (4) of a first filament type;
wherein the sleeve (3) has filaments (5) of a second filament type;
wherein the filament(s) (4) of the first filament type has/have a lower elasticity modulus than the filaments (5) of the second filament type;
wherein the filaments (5) of the second filament type wrap around the core (2) and do not have any mutual preliminary twist;
**characterized in that**
the filament(s) (4) of the first filament type has/have an elasticity modulus of at most 100 mN/tex, and the filaments (5) of the second filament type have an elasticity modulus of at least 200 mN/tex.

2. Hybrid reinforcing substrate (1) according to Claim 1, **characterized in that** the filament(s) (4) of the first filament type is/are from polyester (PES) or polyamide (PA).

3. Hybrid reinforcing substrate (1) according to at least one of the preceding claims, **characterized in that** the filaments (5) of the second filament type are from aramid or from glass or from carbon.

4. Hybrid reinforcing substrate (1) according to at least one of the preceding claims, **characterized in that** the core (2) and/or the sleeve (3) each have a fineness of at most 1100 dtex.

5. Hybrid reinforcing substrate (1) according to at least one of the preceding claims, **characterized in that** the filaments (5) of the sleeve have a twist factor of less than 100, preferably less than 75.

6. Hybrid reinforcing substrate (1) according to at least one of the preceding claims, **characterized in that** the filaments (5) of the second filament type are wound, twisted, or spun around the core (2).

7. Reinforcing substrate layer for elastomer products, in particular for pneumatic vehicle tyres, containing hybrid reinforcing substrates (1) according to at least one or a plurality of Claims 1 to 6.

8. Pneumatic vehicle tyre having a reinforcing substrate layer of the carcass according to Claim 7.

## Revendications

1. Support de fixation hybride (1) pour produits en élastomère, en particulier pour le bandage de ceinture de pneumatiques de véhicules,
- le support de fixation hybride (1) présentant une âme rectiligne (2) et une enveloppe (3) entourant cette âme (2),
- l'âme (2) présentant un filament (4) ou plusieurs filaments (4) d'un premier type de filament,
- l'enveloppe (3) présentant des filaments (5) d'un deuxième type de filament,
- le ou les filaments (4) du premier type de filament présentant un module d'élasticité plus faible que les filaments (5) du deuxième type de filament,
- les filaments (5) du deuxième type de filament s'enroulant autour de l'âme (2) et ne présentant aucune pré-torsion les uns avec rapport aux autres,
**caractérisé en ce que**
- le ou les filaments (4) du premier type de filament présentant un module d'élasticité maximum de 100 mN/tex et les filaments (5) du deuxième type de filament présentant un module d'élasticité d'au moins 200 mN/tex.

2. Support de fixation hybride (1) selon la revendication 1, **caractérisé en ce que** le ou les filaments (4) du premier type de filament sont en polyester (PES) ou en polyamide (PA).

3. Support de fixation hybride (1) selon au moins l'une quelconque des revendications précédentes, **caractérisé en ce que** les filaments (5) du deuxième type de filament sont en aramide ou en verre ou en carbone.

4. Support de fixation hybride (1) selon au moins l'une quelconque des revendications précédentes, **caractérisé en ce que** l'âme (2) et/ou l'enveloppe (3) présentent chacune une finesse de 1100 dtex au maximum.

5. Support de fixation hybride (1) selon au moins l'une quelconque des revendications précédentes, **caractérisé en ce que** les filaments (5) de l'enveloppe présentent un facteur de torsion inférieur à 100, de préférence inférieur à 75.

6. Support de fixation hybride (1) selon au moins l'une quelconque des revendications précédentes, **caractérisé en ce que** les filaments (5) du deuxième type de filament sont enroulés, torsadés ou filés autour de l'âme (2).

7. Couche de support de fixation pour des produits en élastomère, en particulier pour des pneumatiques de véhicules, comprenant des supports de fixation hybride (1) selon au moins l'une quelconque ou plusieurs des revendications 1 à 6.

8. Pneumatique de véhicule présentant une couche de support de fixation du bandage de ceinture selon la revendication 7.
